Europäisches Patentamt

European Patent Office

Office européen des brevets

(11) Publication number : **0 541 223 A1**

(12) **EUROPEAN PATENT APPLICATION**

(21) Application number : **92308145.9**

(22) Date of filing : **09.09.92**

(51) Int. Cl.⁵ : **G01C 17/38, G01C 21/20**

(30) Priority : **10.09.91 JP 230416/91**

(43) Date of publication of application :
**12.05.93 Bulletin 93/19**

(84) Designated Contracting States :
**DE FR GB**

(71) Applicant : **PIONEER ELECTRONIC CORPORATION**
**No. 4-1, Meguro 1-chome**
**Meguro-ku Tokyo 153 (JP)**

(72) Inventor : **Kato, Takahiro**
**No. 25-1, Aza Nishi-machi, Ohaza Yamada**
**Kawagoe-shi, Saitama (JP)**

(74) Representative : **Luckhurst, Anthony Henry William**
**MARKS & CLERK 57-60 Lincoln's Inn Fields**
**London WC2A 3LS (GB)**

(54) **Vehicle-direction detecting apparatus.**

(57)    A vehicle-direction detecting apparatus which uses a geomagnetic sensor and an angular velocity sensor to acquire the accurate direction of a vehicle. The output signal of integrating means is subtracted from a first direction signal based on the XY output signal of the geomagnetic sensor, and the difference signal is attenuated by attenuating means and is then added to an angular velocity signal output from the angular velocity sensor. The added signal is supplied to the integrating means for its integration, and a second direction signal output from the integrating means, which represents the result of the integration, is output as a direction detection signal. When the vehicle is running straight, the direction detecting apparatus functions to converge the direction detection signal to the first direction signal. Although the first direction signal based on the XY output signal of the geomagnetic sensor is influenced by disturbance, it indicates the correct direction as averaged over a long period of time. Therefore, the direction detection signal varies with an angle acquired by integrating the angular velocity signal from the angular velocity sensor, making it possible to always detect the accurate direction.

FIG. 1

The present invention relates to a vehicle-direction detecting apparatuses using a geomagnetic sensor and an angular velocity sensor.

In an on-vehicle navigation apparatus, the running direction of a vehicle is detected by a direction detecting apparatus for later display of that direction. In order to detect the direction, the direction detecting apparatus uses a geomagnetic sensor for detecting the intensity of geomagnetism in the X and Y directions perpendicular to each other on the same plane where the vehicle lies, as well as an angular velocity sensor for detecting the angular velocity of the vehicle. The direction detecting apparatus using those sensors however has the following shortcomings. With regard to the geomagnetic sensor, the detected direction of the vehicle varies by the disturbance of buildings, large vehicles, etc. Regarding the angular velocity sensor, even when its output signal is integrated, it is only the relative direction that can be detected, making it difficult to use the angular velocity sensor as a direction detecting apparatus. In addition, the offset and sensitivity of the angular velocity sensor vary with a change in temperature, etc. so that accurate detection of direction cannot be performed over a long period of time.

It is therefore an object of the present invention to provide a vehicle-direction detecting apparatus using a geomagnetic sensor and an angular velocity sensor, which can acquire the direction accurately.

The vehicle-direction detecting apparatus according to the present invention comprises a geomagnetic sensor for detecting an intensity of geomagnetism in X and Y directions perpendicular to each other on the same plane where a vehicle lies; computing means for computing a first direction signal in accordance with an XY output signal from the geomagnetic sensor and outputting the first direction signal; an angular velocity sensor for detecting an angular velocity of the vehicle; first adding means having two input terminals, to one of which an output signal of the angular velocity sensor is supplied; integrating means for integrating an output signal of the first adding means to yield a second direction signal as a direction detection signal; first subtracting means for computing a difference signal between the first direction signal and the second direction signal; and first attenuating means for attenuating the difference signal and supplying the attenuated difference signal to the other input terminal of the first adding means.

In the vehicle-direction detecting apparatus of the present invention, the output signal of the integrating means is subtracted from the direction signal based on the XY output signal of the geomagnetic sensor by the subtracting means, and the difference signal is attenuated by the attenuating means and is then added to an angular velocity signal output from the angular velocity sensor by the adding means. The output signal of the adding means is supplied to the integrating means for its integration, and the output signal of the integrating means, which represents the result of the integration, is output as a direction detection signal.

Fig. 1 is a block diagram illustrating a vehicle-direction detecting apparatus according to one embodiment of the present invention;

Fig. 2 is a diagram illustrating the convergence characteristic of the apparatus in Fig. 1;

Fig. 3 is a diagram exemplifying signal waveforms for individual portions of the apparatus in Fig. 1;

Fig. 4 is a block diagram illustrating a vehicle-direction detecting apparatus according to another embodiment of the present invention;

Fig. 5 is a diagram illustrating the convergence characteristic of the apparatus in Fig. 4;

Fig. 6 is a signal waveform chart illustrating the operation of a low-pass filter in the apparatus in Fig. 4;

Fig. 7 is a signal waveform chart illustrating the operation of a high-pass filter in the apparatus in Fig. 4;

Fig. 8 is a block diagram illustrating a vehicle-direction detecting apparatus according to a further embodiment of the present invention; and

Fig. 9 is a diagram exemplifying signal waveforms for individual portions of the apparatus in Fig. 8.

Preferred embodiments of the present invention will now be described in detail referring to the accompanying drawings.

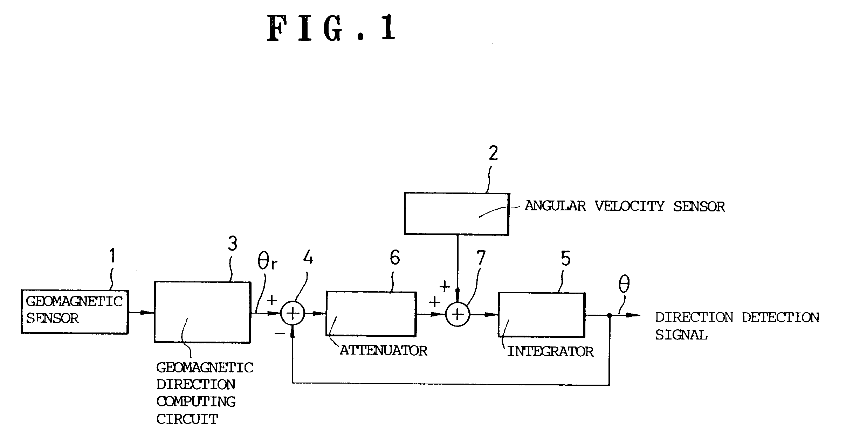

Fig. 1 shows a vehicle-direction detecting apparatus embodying the present invention. This direction detecting apparatus is provided with two sensors: a geomagnetic sensor 1 that detects the geomagnetism at the position of a vehicle as X and Y components, and an angular velocity sensor 2 that detects the angular velocity of that vehicle. The geomagnetic sensor 1 has a pair of magnetism detecting elements arranged on the same plane at a phase angle of 90° therebetween, one of the elements detecting the geomagnetic component in the X (eastward) direction and the other detecting the geomagnetic component in the Y (northward) direction. The output of the geomagnetic sensor 1 is connected to a geomagnetic direction computing circuit 3, which computes a geomagnetic direction signal θr as a first direction signal from the X and Y component signals output from the geomagnetic sensor 1. The output of the geomagnetic direction computing circuit 3 is connected to a subtracter 4, which yields a difference signal representing the difference between the geomagnetic direction signal θr and a signal output from an integrator 5 to be described later. The output of the subtracter 4 is connected via an attenuator 6 to an adder 7. The adder 7 is supplied with an angular velocity signal ω (the output signal of the angular velocity sensor 2) as well as the output signal of the attenuator 6. The adder 7 adds the received signals and outputs the resultant signal. The output signal of the adder 7 is supplied to the integrator 5. The integrator 5 integrates the output signal of the adder 7 and outputs a detected direction signal θ as a second direction signal. This detected direction signal θ will be an output signal of the present direction detecting apparatus. It is to be noted that the signal level of the geomagnetic direction signal θr represents the direction θr.

As the geomagnetic sensor 1 makes one revolution on a horizontal plane, the locus of a circle or a magnetic circle will be drawn on the X and Y coordinates by the output values of the X and Y magnetism detecting elements. Given that the center point of the circular locus is (x0, y0) and the X and Y component signals output from the geomagnetic sensor 1 represent XY coordinate data (x, y), the direction θr can be expressed as follows:

$$\theta r = \tan^{-1} \frac{y - y0}{x - x0} \quad (1)$$

The geomagnetic direction computing circuit 3 performs the operation expressed by the equation (1) to acquire the geomagnetic direction signal θr.

The difference signal between this geomagnetic direction signal θr and the output signal of the integrator 5 is output from the subtracter 4, and is added to the angular velocity signal ω from the angular velocity sensor 2 by the adder 7. The output signal of the adder 7 is integrated by the integrator 5, yielding the detected direction signal θ or the output signal of this apparatus.

A description will now be given of how the detected direction signal θ varies with respect to the geomagnetic direction signal θr and angular velocity signal ω.

Given that the coefficient of the attenuator 6 is 1/K and the integration by the integrator 5 is expressed by 1/S, the following relation is satisfied in the structure shown in Fig. 1:

$$\{(\theta r - \theta) \times (1/K) + \omega\} \times 1/S = \theta \quad (2)$$

Thus, the detected direction signal θ is expressed as

$$\theta = (\theta r + \omega K)/(KS + 1) \quad (3)$$

When the vehicle is running straight, ω = 0 so that the detected direction signal θ in the equation (3) will be

$$\theta = \theta r/(KS + 1) \quad (4)$$

Rearranging the equation (4) yields

$$\theta/\theta r = 1/(KS + 1) \quad (5)$$

With θ/θr taken as a transfer function G(S), multiplying this function by 1/s and then subjecting the result to inverse Laplace transform in order to obtain the step response of G(S) yields:

$$L^{-1} \frac{1}{S} G(S) = L^{-1} \frac{1}{S + KS^2} = L^{-1} \frac{1}{S} - L^{-1} \frac{1}{1/K + S} \quad \cdots (6)$$
$$= 1 - e^{-t/k}$$

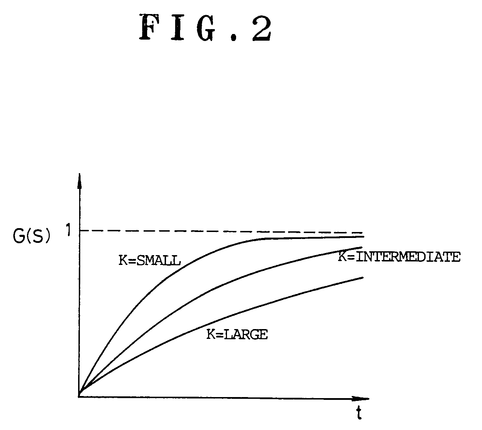

From the equation (6), the G(S) and time t characteristic becomes as illustrated in Fig. 2. It is apparent that the smaller K is, the quicker G(S) converges to "1". In other words, G(S) = 1 means that θ = θr, and the detected direction signal θ converges to the geomagnetic direction signal θr when the vehicle is running straight. When the running direction of the vehicle changes, since ωK/(KS + 1) in the equation (3) is added, the detected direction signal θ will change, relative to the geomagnetic signal θr, for an angle corresponding to ωK/(KS + 1), that is, an angle obtained by integrating the angular velocity signal ω of ωK/KS = ω/S because 1 can be ignored in the high-pass region where S is large. Therefore, the low-pass component of the detected direction signal θ is determined by the geomagnetic direction signal θr while the high-pass component of the signal θ is determined by the angle acquired by integrating the angular velocity signal ω.

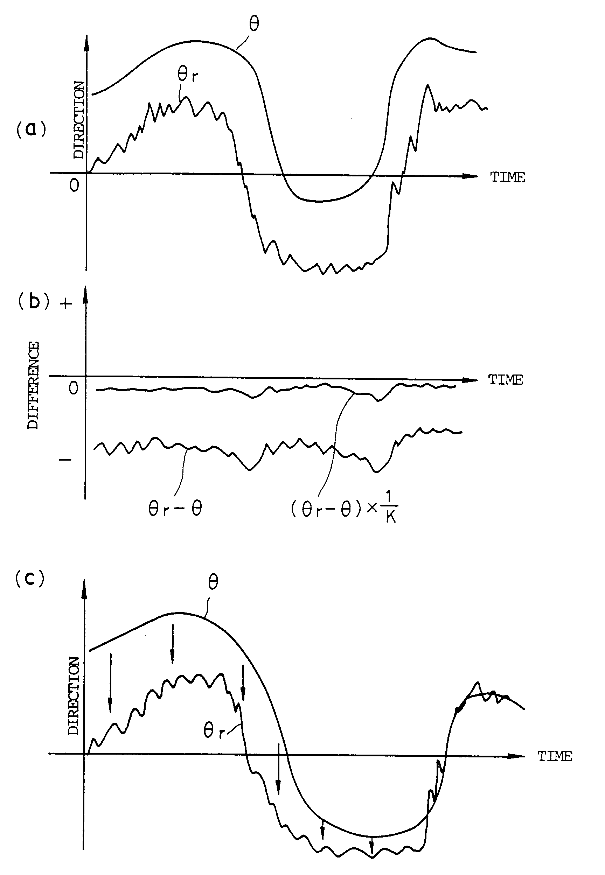

Fig. 3 exemplifies the operations of the individual portions of the apparatus shown in Fig. 1. The detected direction signal θ will be as indicated in (a) in Fig. 3 with respect to the geomagnetic direction signal θr. (b) in Fig. 3 shows the waveforms of the output signal of the subtracter 4, "θr - θ", and the output signal of the attenuator 6, "(θr - θ) × 1/K". As shown in (c) in Fig. 3, the detected direction signal θ converges to the geomagnetic direction signal θr as indicated by arrows by the closed loop.

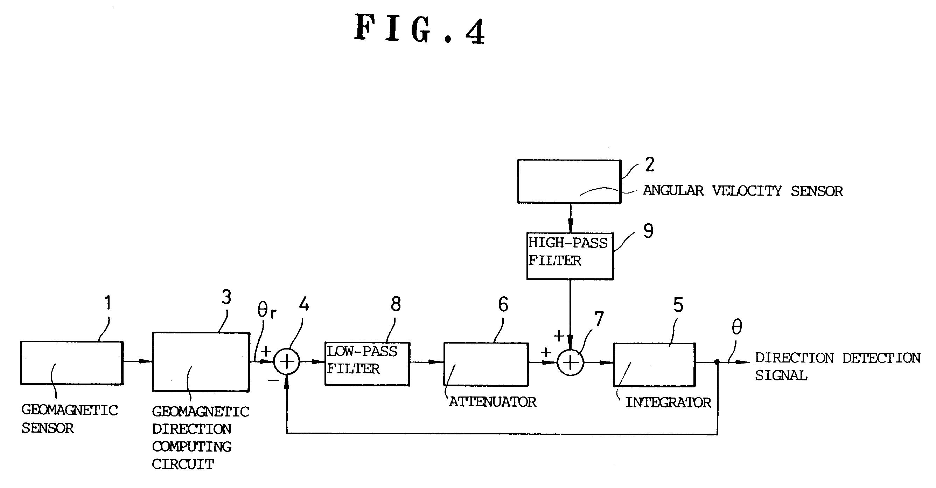

Fig. 4 illustrates another embodiment of the present invention. In the present vehicle-direction detecting apparatus shown in Fig. 4, a low-pass filter 8 is inserted between the subtracter 4 and the attenuator 6, and a high-pass filter 9 between the angular velocity sensor 2 and the adder 7. The high-pass filter 9 serves to cut off a fraction of an offset when it occurs in the output signal of the angular velocity sensor 2. The cutoff frequency of the high-pass filter 9 is very low, for example, 0.001 Hz. The other structure of this apparatus is the same as that of the apparatus shown in Fig. 1.

For easier understanding of this embodiment, a description will first be given of the case where only the low-pass filter 8 is inserted. Given that the coefficient of the low-pass filter 8 is 1/(JS + 1), the following relation is satisfied:

$$\{(\theta r - \theta) \times \frac{1}{1 + JS} \times \frac{1}{K} = \omega\} \times \frac{1}{S} = \theta \quad (7)$$

Thus, the detected direction signal $\theta$ is expressed as

$$\theta = \{\theta r + \omega K(JS + 1)\}/(KJS^2 + KS + 1) \quad (8)$$

When the vehicle is running straight, $\omega = 0$ so that the detected direction signal $\theta$ in the equation (8) will be

$$\theta = \theta r/(KJS^2 + KS + 1) \quad (9)$$

Rearranging the equation (9) yields

$$\theta/\theta r = 1/(KJS^2 + KS + 1) \quad (10)$$

With $\theta/\theta r$ taken as a transfer function G(S), multiplying this function by 1/S and then subjecting the result to inverse Laplace transform in order to obtain the step response yields:

$$
\begin{aligned}
L^{-1}\frac{1}{S}G(S) \; &= L^{-1}\frac{1}{S(KJS^2+KS+1)} \\
&= L^{-1}\frac{1}{S} \times \frac{\dfrac{1}{KJ}}{S^2+\dfrac{1}{J}S+\dfrac{1}{KJ}} \qquad \cdots(11) \\
&= L^{-1}\frac{1}{S} \times \frac{\omega r}{S^2+2\zeta\omega r S+\omega r^2}
\end{aligned}
$$

where

$$\omega r =\sqrt{\left(\frac{1}{KJ}\right)}, \quad \zeta = \frac{1}{2}\sqrt{\left(\frac{K}{J}\right)} \; .$$

The equation (11) is rewritten as

$$1 - \frac{e^{-\zeta\omega rt}}{\sqrt{1 - \zeta^2}\omega r}\sin(\sqrt{1 - \zeta^2}\,\omega rt + \tan^{-1}\frac{\sqrt{1 - \zeta^2}}{\zeta}) \quad (12)$$

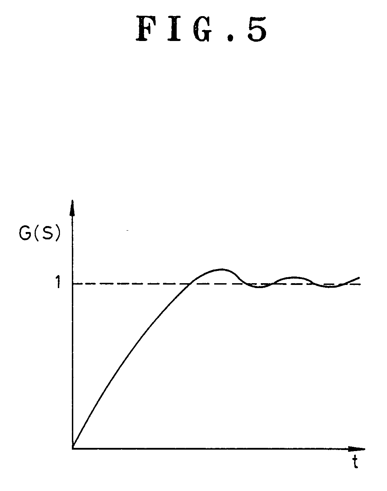

From the equation (11), the G(S) vs. time t characteristic will be as illustrated in Fig. 5. When the vehicle is running straight, the geomagnetic disturbance is reduced by setting $\omega r$ and $\zeta$ at proper values so that the detected direction signal $\theta$ may converge to the geomagnetic direction signal $\theta r$.

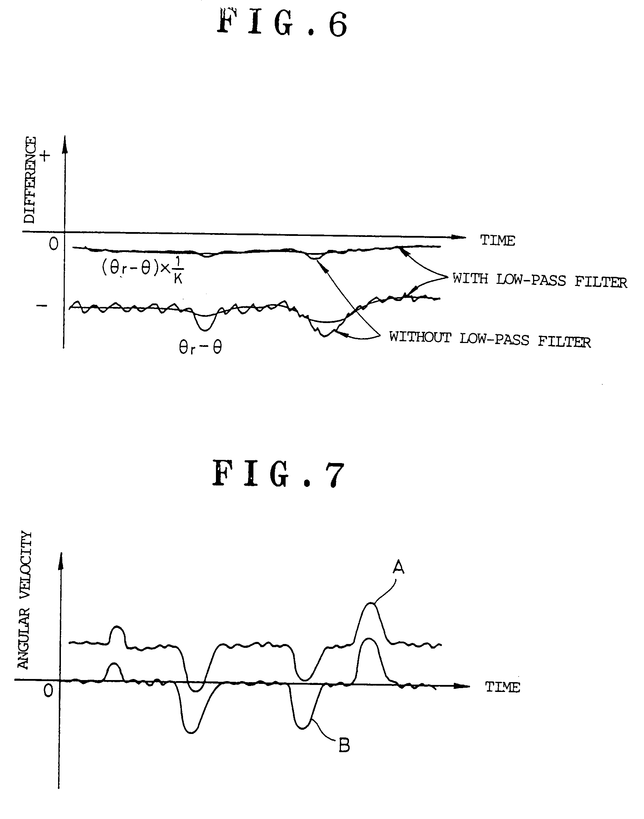

Fig. 6 illustrates the waveforms in (b) in Fig. 3 when the low-pass filter 8 is inserted as against those when it is not inserted.

In the case where only the high-pass filter 9 is inserted, given that the coefficient of the high-pass filter 9 is TS/(1 + TS), the following relation will be satisfied:

$$\{(\theta r - \theta) \times \frac{1}{k} + \omega \frac{TS}{1 + TS}\} \times \frac{1}{S} = \theta \quad (13)$$

Thus, the detected direction signal $\theta$ is expressed as

$$\theta = \frac{\theta r}{1 + KS} + \frac{TKS\omega}{(1 + TS)(1 + KS)} \quad (14)$$

Assuming the stationary characteristic of S = 0 from the theorem of the final value, and then substituting S = 0 into the equation (14) yields

$$\theta = \theta r \quad (15)$$

Therefore, no angle error would occur even if the angular velocity signal $\omega$ output from the angular velocity sensor 2 includes an offset B to be expressed as $\omega = \omega' + B$. If a waveform A in Fig. 7 represents the output signal of the angular velocity sensor 2, a waveform B represents the output signal of the high-pass filter 9 from which the offset has been removed.

Multiplying $\theta$ by 1/S and then subjecting the result to inverse Laplace transform in order to obtain the step response yields as follows, and when the vehicle is moving straight, the detected direction signal $\theta$ will converge to the geomagnetic direction signal $\theta r$.

$$L^{-1}(\frac{1}{S}\theta) = \theta r (1 - e^{-\frac{t}{K}}) + \frac{TK\omega}{T-K}(e^{-\frac{t}{T}} - e^{-\frac{t}{K}})$$

$$\underset{t \to \infty}{= \theta r (1 - 0) + \frac{TK\omega}{T-K}(0 - 0) = \theta r} \qquad \cdots (16)$$

Although the low-pass filter 8 is inserted between the subtracter 4 and the attenuator 6 in this embodiment, the filter 8 may be inserted between the attenuator 6 and the adder 7.

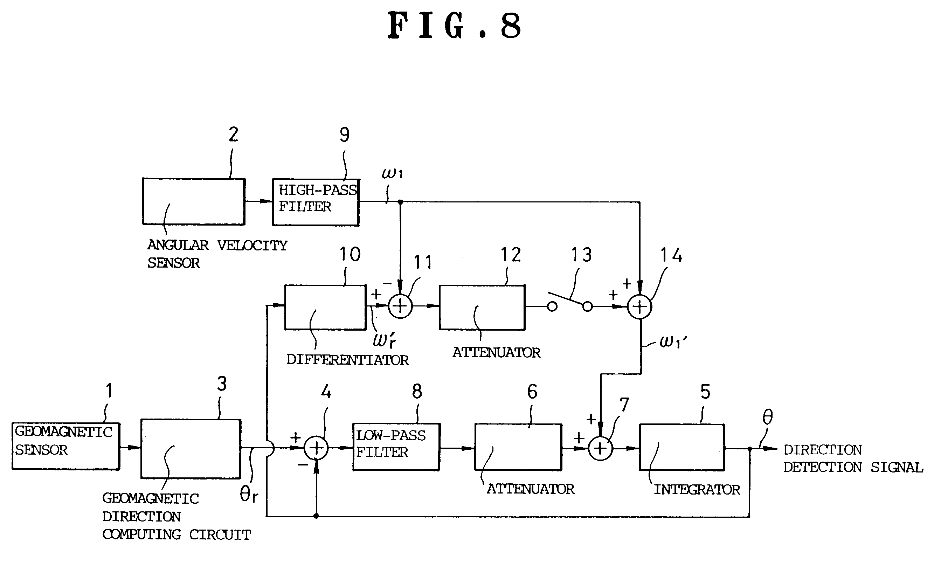

Fig. 8 illustrates a further embodiment of the present invention. In the present vehicle-direction detecting apparatus shown in Fig. 8, the output of the integrator 5 is connected to a subtracter 11 via a differentiator 10 as well as the subtracter 4. The subtracter 11 subtracts the output from the high-pass filter 9 from the output signal of the differentiator 10. The output of the subtracter 11 is connected to an attenuator 12 whose output is connected via a switch 13 to an adder 14. When the switch 13 is closed, the adder 14 adds the output signals of the attenuator 12 and the high-pass filter 9 together and supplies the result to the adder 7. When the switch 13 is open, the adder 14 sends the output signal of the high-pass filter 9 directly to the adder 7. The other structure is the same as that of the apparatus shown in Fig. 4. The switch 13 is closed only when the level of the output signal of the differentiator 10 is equal to or greater than a predetermined level. Such operations are accomplished by a comparator thought not shown.

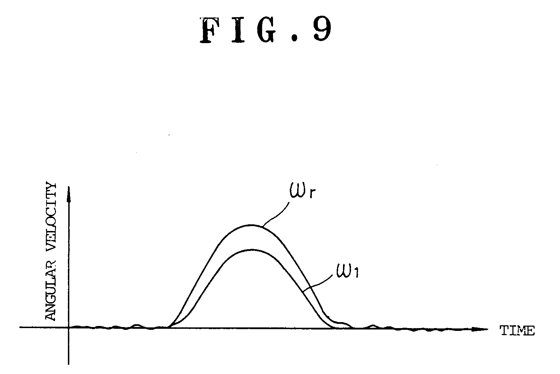

When the sensitivity of the angular velocity sensor 2 is inaccurate, there is a difference between a signal $\omega_1$ acquired through the high-pass filter 9 and an angular velocity signal $\omega r$ acquired by differentiating the detected direction signal $\theta$ in the differentiator 10. Since the detected direction signal $\theta$ converges to the geomagnetic direction signal $\theta r$ as will be described later, it always indicates the correct direction. It is therefore considered that differentiation of the detected direction signal $\theta$ yields the accurate angular velocity. The accurate angular velocity $\omega_1'$ can be obtained by adding an angular velocity difference $\omega r - \omega_1$ output of the subtracter 11, to $\omega_1$ by the adder 14. Fig. 9 shows the output signal $\omega r$ of the differentiator 10 and the output signal $\omega_1$ of the high-pass filter 9. The attenuator 12 serves to converge the angular velocity to the correct one gradually, not immediately, and to prevent the angular velocity sensor 2 from becoming oversensitive to noise.

Given that, with the above structure, the coefficient of the differentiator 10 is denoted by S and that of the attenuator 12 by 1/M, the following relation will be satisfied.

$$\omega_1' = \omega_1 \times \{1 + \frac{1}{M}(\frac{\omega r - \omega_1}{\omega_1})\} = \omega_1 + \frac{1}{M}(\omega r - \omega_1) \quad (17)$$

In other words, when the output signal level of the differentiator 10 is equal to the predetermined level or above, the sensitivity of the angular velocity sensor 2 will be corrected. When M = 1 in the equation (17), $\omega_1' = \omega r$ so that the angular velocity promptly converges to the correct value. To prevent the over-sensitivity of the angular velocity sensor 2 to noise, however, M is determined to be larger than "1" (M > 1) so that the angular velocity gradually converges to the correct value.

As $\omega_1 = \omega TS/(1 + TS)$ and $\omega r = \theta S$, the equation (17) can be rewritten as

$$\omega_1' = \omega \frac{TS}{1 + TS} + \frac{1}{M}(\theta S - \omega \frac{TS}{1 + TS}) \quad (18)$$

To simplify the explanation, the general structure will be explained using the equation (2) in the case the low-pass filter 8 is omitted. As $\omega$ in the equation (2) corresponds to $\omega_1'$, substituting $\omega_1'$ of the equation (18) into the equation (2) yields

$$\{(\theta r - \theta) \times \frac{1}{K} + \omega \frac{TS}{1 + TS} + \frac{1}{M}(\theta S - \omega \frac{TS}{1 + TS})\} \times \frac{1}{S} = \theta \quad (19)$$

Rearranging the equation (19), the detected direction signal $\theta$ is expressed as

$$\theta = \frac{\frac{\theta r}{K} + \frac{TS}{1 + TS}(\omega - \frac{\omega}{M})}{S - \frac{S}{M} + \frac{1}{K}} = \frac{\theta r + \frac{TS}{1 + TS}(K - \frac{K}{M})}{1 + (K - \frac{K}{M})S} \quad (20)$$

Setting K - K/M = A, the equation (20) can be rewritten as

$$\theta = \frac{\theta r}{1 + AS} + \frac{TA\omega S}{(1 + AS)(1 + TS)} \quad (21)$$

The equation (21) is identical to the equation (14) and, therefore, when the vehicle is running straight, the detected direction signal $\theta$ will converge to the geomagnetic direction signal $\theta r$.

Although the output signal of the high-pass filter 9 is supplied to the subtracter 11 and to the adder 14 in this embodiment, the circuit structure is not limited to this particular design. For instance, the output signal of the angular velocity sensor 2 may be supplied directly to the subtracter 11 and to the adder 14 whose output signal is supplied via the high-pass filter 9 to the adder 7. The differentiator 10 may be arranged to differentiate the geomagnetic direction signal θr.

According to the present invention, the output signal of the integrating means is subtracted from the first direction signal based on the XY output signal of the geomagnetic sensor by the subtracting means, and the difference signal is attenuated by the attenuating means and is then added to an angular velocity signal output from the angular velocity sensor by the adding means. The output signal of the adding means is supplied to the integrating means for its integration, and the second direction signal output from the integrating means, which represents the result of the integration, is output as a direction detection signal. With this structure, the direction detecting apparatus functions to converge the direction detection signal to the first direction signal. Although the first direction signal based on the XY output signal of the geomagnetic sensor is influenced by disturbance, it indicates the correct direction as averaged over a long period of time. Therefore, the direction detection signal varies with an angle acquired by integrating the angular velocity signal from the angular velocity sensor, making it possible to always detect the accurate direction.

## Claims

1. A vehicle-direction detecting apparatus comprising:

   a geomagnetic sensor for detecting an intensity of geomagnetism in X and Y directions perpendicular to each other on the same plane where a vehicle lies;

   computing means for computing a first direction signal in accordance with an XY output signal from said geomagnetic sensor and outputting said first direction signal;

   an angular velocity sensor for detecting an angular velocity of said vehicle;

   first adding means having two input terminals, to one of which an output signal of said angular velocity sensor is supplied;

   integrating means for integrating an output signal of said first adding means to yield a second direction signal as a direction detection signal;

   first subtracting means for computing a difference signal between said first direction signal and said second direction signal; and

   first attenuating means for attenuating said difference signal and supplying said attenuated difference signal to the other input terminal of said first adding means.

2. The vehicle-direction detecting apparatus according to Claim 1, further comprising a low-pass filter inserted between said first subtracting means and said first adding means.

3. The vehicle-direction detecting apparatus according to Claim 1, further comprising a high-pass filter inserted between said angular velocity sensor and said first adding means.

4. The vehicle-direction detecting apparatus according to Claim 1, further comprising:

   differentiating means for differentiating an output signal of said integrating means;

   second subtracting means for computing a difference signal between the output signal of said differentiating means and said output signal of said angular velocity sensor;

   second attenuating means for attenuating said difference signal output from said second subtracting means; and

   second adding means for adding an output signal of said second attenuating means to said output signal of said angular velocity sensor and supplying a resultant signal to said one input terminal of said first adding means.

5. The vehicle-direction detecting apparatus according to Claim 4, wherein said second attenuating means has switch means for stopping output of said difference signal when a level of said output signal of said differentiating means is lower than a predetermined level.

# FIG. 1

# FIG.2

(a)

θ

θr

DIRECTION

0                                                    TIME

(b) +

DIFFERENCE

0                                                    TIME

−

$\theta r - \theta$                    $(\theta r - \theta) \times \dfrac{1}{K}$

(c)

θ

DIRECTION

θr

TIME

FIG. 4

GEOMAGNETIC SENSOR — 1

GEOMAGNETIC DIRECTION COMPUTING CIRCUIT — 3

ANGULAR VELOCITY SENSOR — 2

HIGH-PASS FILTER — 9

LOW-PASS FILTER — 8

ATTENUATOR — 6

INTEGRATOR — 5

$\theta_r$

4

7

$\theta$

DIRECTION DETECTION SIGNAL

# FIG.5

# F I G . 6

$(\theta_r - \theta) \times \dfrac{1}{K}$

WITH LOW-PASS FILTER

WITHOUT LOW-PASS FILTER

$\theta_r - \theta$

# F I G . 7

A

B

# FIG.8

EP 0 541 223 A1

# FIG.9

European Patent Office

# EUROPEAN SEARCH REPORT

Application Number

EP 92 30 8145

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | GB-A-2 224 577 (JAPAN AVIATION ELECTRONICS IND LTD)<br>* the whole document * | 1 | G01C17/38<br>G01C21/20 |
| A | DE-A-4 034 965 (NISSAN)<br>* the whole document * | 1 | |
| A | EP-A-0 218 273 (N.V.PHILIPS` GLOEILAMPENFABRIEKEN)<br>* abstract; figures 1,2 * | 1 | |
| A | EP-A-0 194 802 (ETAK)<br>* abstract; figure 1 * | 1 | |
| A | EP-A-0 373 317 (SUMITOMO ELECTRIC IND.)<br>* the whole document * | 1 | |
| A | EP-A-0 359 150 (BMW)<br>* the whole document * | 1 | |
| A | US-A-5 040 122 (NEUKIRCHNER ET AL.)<br>* abstract; figure 1 * | 1 | TECHNICAL FIELDS SEARCHED (Int. Cl.5) |
| | ----- | | G01C |

The present search report has been drawn up for all claims

| Place of search | Date of completion of the search | Examiner |
|---|---|---|
| THE HAGUE | 15 JANUARY 1993 | HOEKSTRA F.R. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)

15